# EUROPÄISCHE PATENTSCHRIFT

(11) **EP 3 795 508 B1**
(45) Veröffentlichungstag und Bekanntmachung des Hinweises auf die Patenterteilung: **07.06.2023**
(21) Anmeldenummer: 19198661.1
(22) Anmeldetag: 20.09.2019
(51) Int. Cl.: B65G 53/56, F16K 11/072

(54) **MATERIALWEICHE UND TRENNVORRICHTUNG**
MATERIAL SORTING GATE AND SEPARATING DEVICE
FILTRE SÉPARATEUR DE MATÉRIAU ET DISPOSITIF DE SÉPARATION

(43) Veröffentlichungstag der Anmeldung: 24.03.2021
(73) Patentinhaber: Sesotec GmbH, 94513 Schönberg (DE)
(72) Erfinder: HILLER, Michael, 94259 Kirchberg (DE); ERTL, Stefan, 94269 Rinchnach (DE)
(74) Vertreter: Glück Kritzenberger Patentanwälte PartGmbB

(56) Entgegenhaltungen:
- EP-A1- 0 148 990
- WO-A1-2019/170319
- DE-A1-102007 015 733
- DE-U1- 9 104 817
- GB-A- 1 032 001
- US-A- 4 938 637
- US-A1- 2006 086 844

## Beschreibung

Die vorliegende Erfindung betrifft eine Materialweiche zum Separieren von Schüttgut. Die Materialweiche hat Einlass und wenigstens zwei Auslässe als auch wenigstens ein zwischen dem Einlass und den Auslässen mittels eines Schwenklagers schwenkbar angeordnetes Leitelement, um den Materialstrom wahlweise einem der Auslässe zuzuführen. Die Materialweiche hat ein Gehäuse und einen Schwenkantrieb zum Schwenken des Leitelements, um dieses fluchtend mit jeweils einem der mehreren Auslässen auszurichten. Eine derartige Materialweiche wird insbesondere in Materialtrennanlagen, zum Beispiel für Schüttgüter im Lebensmittelbereich und Nichtlebensmittelbereich, z.B. in der Kunststoffverarbeitung eingesetzt, um unerwünschte Produkte, wie zum Beispiel Metallteile, aus einem Materialstrom auszusondern. Ein Problem dieser bekannten Materialweiche besteht darin, dass das Leitelement, welches oft durch ein Leitrohr gebildet ist, leicht verschmutzt und die Reinigung aufwendig ist.

Das Dokument US 2006/086844 A1 offenbart eine Materialweiche zum Separieren von Schüttgut, mit einem Gehäuse, welches einen Einlass und wenigstens zwei Auslässen als auch wenigstens ein zwischen dem Einlass und den Auslässen mittels eines Schwenklagers schwenkbar angeordnetes Leitelement aufweist, um den Materialstrom wahlweise einem der Auslässe zuzuführen, welche Materialweiche einen Schwenkantrieb zum Schwenken des Leitelements aufweist, um dieses fluchtend zwischen dem Einlass und jeweils einem der mehreren Auslässe auszurichten, wobei das Gehäuse eine Tür aufweist, die an dem Gehäuse abnehmbar gehalten ist, wobei ein erstes Lagerelement des Schwenklagers an dem Gehäuse angeordnet ist und ein zweites Lagerelement des Schwenklagers an der Tür, und wobei das Leitelement abnehmbar in dem ersten und zweiten Lagerelement aufgenommen ist.

Es ist daher Aufgabe der Erfindung, eine Materialweiche der oben genannten Art zu schaffen, die leicht zu reinigen ist. Die Aufgabe wird erfindungsgemäß durch eine Materialweiche mit den Merkmalen des Anspruchs 1 gelöst. Vorteilhafte Weiterbildungen der Erfindung sind Gegenstand der abhängigen Ansprüche. Vorteilhafte Weiterbildungen der Erfindung sind ebenfalls in der Beschreibung und in den Zeichnungen beschrieben.

Erfindungsgemäß hat das Gehäuse der Materialweiche eine Türe, die an dem Gehäuse schwenkbar angelenkt ist. Ein erstes Lagerelement des Schwenklagers ist an dem Gehäuse angeordnet und ein zweites Lagerelement des Schwenklagers an der Türe. Das Leitelement ist abnehmbar in dem ersten und/oder zweiten Lagerelement aufgenommen, vorzugsweise abnehmbar in dem ersten und zweiten Lagerelement. Wenn das Leitelement nur abnehmbar in dem ersten Lagerelement aufgenommen ist, wird mit dem Öffnen der Türe das Leitelement, zum Beispiel ein Leitrohr, zusammen mit der Türe von dem Gehäuse weg bewegt, in einer Schwenkbewegung. Das Leitelement kann dann leicht gereinigt werden. Vorzugsweise ist das Leitelement abnehmbar sowohl im ersten als auch im zweiten Lagerelement aufgenommen. Beim Öffnen der Türe hängt dann das Leitelement nur noch an dem ersten gehäuseseitigen Lagerelement und kann von dort einfach durch Abziehen entnommen und gereinigt werden. Die erfindungsgemäße Ausbildung der Materialweiche erlaubt somit eine sehr einfache und intensive Reinigung als auch einen einfachen Austausch des Leitelements. Auf der anderen Seite kann nach dem Entnehmen des Leitelements auch das Gehäuse der Materialweiche einfach gereinigt werden bzw. Wartungsarbeiten durchgeführt werden.

Gemäß der Erfindung ist die Tür schwenkbar an dem Gehäuse der Materialweiche angelenkt.

Durch das Abnehmen oder Öffnen der Tür wird das Leitelement freigelegt, so dass dieses leichter gereinigt oder sogar aus dem Gehäuse der Materialweiche entnommen werden kann.

In einer vorteilhaften Ausführungsform der Erfindung sind die gehäuse- und türseitigen ersten und zweiten Lagerelemente durch Lagerbuchsen gebildet. Am Leitelement sind dann Lagerzapfen ausgebildet, welche sich in die beiden Lagerbuchsen hinein erstrecken. Auf diese Weise wird ein sehr einfach ausgebildetes Schwenklager gebildet. Die Lagerzapfen können an den beiden voneinander weg weisenden Enden einer durchgehenden Welle ausgebildet sein, was jedoch den Nachteil hätte, dass dann entweder die Schwenkachse an einer Seitenwand des Leitelements angeordnet sein müsste oder die Welle durch den Strömungsdurchmesser des Leitrohrs hindurchragen würde und damit den Materialfluss behindern. Daher ist vorzugsweise, im Falle das Leitelement durch ein Leitrohr gebildet ist, das leitelementseitige Lagerteil durch zwei Lagerzapfen gebildet, die sich voneinander abgewandten Seitenwänden des Leitrohres erstrecken und damit in den Lagerbuchsen am Gehäuse und an der Tür der Materialweiche aufgenommen werden können. Auf diese Weise bleibt der Durchmesser des Leitrohres frei und die Lagerung behindert nicht den Materialfluss durch das Leitrohr.

Vorzugsweise ist in einem der Lagerzapfen ein nicht-rotationssymmetrisches Profil versenkt und/oder erhaben ausgebildet, welches mit einem komplementären Profil am Schwenkantrieb in Eingriff bringbar ist. Wenn somit das Leitelement, insbesondere Leitrohr, von dem ersten Lagerelement abgenommen wird, um es zu reinigen, wird die rotationsfeste Verbindung mit dem Schwenkantrieb gelöst und beim Hineinstecken in das zweite Element wird durch das gegenseitige Ineingrifftreten des nicht-rotationssymmetrischen Profils mit dem komplementären Profil des Schwenkantriebs das Leitrohr bzw. Leitelement einfach wieder mit dem Schwenkantrieb in eine Funktionsverbindung gebracht, so dass es durch den Schwenkantrieb wieder in seine unterschiedlichen Positionen in Ausrichtung mit wenigstens einem der unterschiedlichen Auslässe geschwenkt werden kann.

Vorzugsweise ist der Schwenkantrieb mit dem Gehäuse oder der Türe der Materialweiche verbunden, insbesondere mit dem Gehäuse. Auf diese Weise hat man die wesentlichen Komponenten kompakt an dem Gehäuse der Materialweiche angeordnet. Wenn der Schwenkantrieb an der Außenseite des Gehäuses montiert ist, kann der Schwenkantrieb zu Wartungszwecken oder zum Austausch abgenommen werden, ohne das Gehäuse der Materialweiche zu öffnen. Weiterhin lässt sich durch die Montage des Schwenkantriebs am Gehäuse eine leichte Funktionsverbindung zwischen dem Schwenkantrieb und dem Leitelement herstellen, zum Beispiel in obiger Weise durch ein nicht-rotationssymmetrisches Profil an dem Lagerteil des Leitelements und ein komplementäres Profil an dem Schwenkantrieb.

Vorzugsweise ist der Schwenkantrieb mit der Gehäusewand verbunden, in welcher das erste Lagerelement ausgebildet ist. Der Schwenkantrieb behindert somit nicht das Öffnen der Türe. Zum anderen kann bei geöffneter Türe die Funktion des Schwenkantriebs überprüft werden, weil nach dem Öffnen der Türe das Leitelement immer noch in Funktionsverbindung mit dem Schwenkantrieb besteht und in dem ersten Lagerelement aufgenommen ist. Andererseits kann nun insbesondere das Lagerteil leicht von dem Schwenkantrieb und dem ersten Lagerelement abgezogen werden, um es zu reinigen oder auszuwechseln.

In einer vorteilhaften Weiterbildung der Erfindung ist das Leitelement als Leitrohr ausgebildet. Dieses kann einen kreisrunden oder einen rechteckigen, zum Beispiel quadratischen Querschnitt haben je nach Art des Materialflusses und den Anforderungen der Anlage. Der Vorteil eines Leitrohres besteht darin, dass der Materialfluss gut gegenüber dem Innenraum des Gehäuses abgeschirmt wird, so dass der Gehäuseinnenraum zwischen dem Leitrohr und dem Gehäuse nicht durch das Material verschmutzt wird. Zum anderen kann durch ein Leitrohr das Material sehr definiert einem von mehreren Auslässen zugeführt werden, insbesondere wenn die Auslässe und der Einlass auch rohrförmig mit dem gleichen Grundquerschnitt ausgebildet sind.

Vorzugsweise ist zwischen den Auslässen, die insbesondere am Gehäuse der Materialweiche ausgebildet sind, ein Trenn- oder Leitvorsprung angeordnet, insbesondere ausgebildet als spitz zulaufenden Rippe, um beim Umschwenken des Leitrohres von einer ersten in eine zweite Position entsprechend den mehreren Auslässen den Materialstrom von dem Zwischenraum zwischen den Auslässen in diese bzw. einen von diesen abzuleiten um ein Verstopfen der Materialweiche zu verhindern, was möglich wäre, wenn sich Material in dem Gehäusebereich zwischen zwei Auslässen ansammeln würde.

Entsprechend sind die Ein- und Auslässe durch Rohre gebildet, wobei das Leitrohr als auch die Ein- und Auslässe insbesondere einen rechteckigen, insbesondere quadratischen, Querschnitt haben. Dies hat den Vorteil, dass in dem Gehäusebereich, in welchem die Auslässe angeordnet sind, die Auslassbereiche zweier nebeneinanderliegender Auslässe nur durch einen länglichen Steg voneinander getrennt, in welchem sich gut eine Trennrippe der oben genannten Art anordnen lässt, um ein Verstopfen des Gehäuses der Materialweiche zu vermeiden.

Vorzugsweise liegt die Schwenkachse des Leitelements an seinem dem Einlass zugewandten Ende. Auf diese Weise ist ein leichtes Verschwenken des Leitelements in Richtung auf einen der mehreren Auslässe möglich. Vorzugsweise sind zwei Auslässe in dem Gehäuse der Materialweiche angeordnet. Es können allerdings auch drei und mehr Auslässe sein entsprechend dem Größenverhältnis des Gehäuses der Materialweiche und der Größe der Auslässe. Vorzugsweise sind die Auslässe auf einer Kreisbogenbahn um das Schwenklager des Leitelements angeordnet.

Vorzugsweise bestehen das Gehäuse und/oder die Tür der Materialweiche aus Metall. Auf diese Weise wird eine robuste Materialweiche geschaffen, in welcher die Einlässe und Auslässe integriert angeordnet sein können, so dass die Materialweiche im Wesentlichen nur aus dem Gehäuse mit den insbesondere rohrförmigen Ein- und Auslässen besteht und dem darin schwenkbar gelagerten Leitelement, der Gehäusetür und dem Schwenkantrieb. Die gesamte aus Metall bestehende Materialweiche ist somit sehr robust.

In einer vorteilhaften Weiterbildung der Erfindung ist in Verbindung mit der Türe ein Türsensor angeordnet, der konzipiert ist, ein Statussignal an eine Steuerung zu übermitteln, um den Schwenkantrieb zu deaktivieren. Auf diese Weise kann sichergestellt werden, dass beim Öffnen der Türe der Materialweiche der Schwenkantrieb sofort gestoppt wird, so dass Verletzungen einer Person beim Handhaben der offenen Materialweiche vermieden werden können.

Die Erfindung betrifft ebenfalls eine Trennvorrichtung für Schüttgüter, umfassend eine Materialweiche nach der vorgenannten Art, eine Materialzufuhr, eine Förderstrecke für Schüttgüter, zum Beispiel eine Fallstrecke, in welcher Förderstrecke eine Detektionseinrichtung angeordnet ist, um wenigstens zwei in dem Schüttgut enthaltene Materialarten zu trennen, wobei in Abhängigkeit von einem Signal der Detektionseinrichtung ein Schwenkantrieb der Materialweiche betätigbar ist, um mittels der Betätigung des Leitelements der Materialweiche eine Materialart in einem Teil des Materialflusses in einen Teil der mehreren Auslässe der Materialweiche zu leiten. Auf diese Weise wird durch die Kombination der Materialweiche in Verbindung mit der Detektionseinrichtung eine komplette Trennvorrichtung, zum Beispiel zum Aussondern von Schlechtelementen, wie zum Beispiel Metall aus Lebensmitteln, realisiert.

Vorzugsweise ist die Detektionseinrichtung in einem Gehäuse angeordnet, welches ein Fallrohr umschließt, welches Fallrohr in dem Gehäuse der Materialweiche endet. Auf diese Weise wird eine sehr integrierte und kompakte Trennvorrichtung geschaffen, bei welcher die Detektionseinrichtung an der Materialweiche selbst angekoppelt ist. Die gesamte Trennvorrichtung lässt sich somit in einem sehr kleinen Bereich unterbringen.

Vorzugsweise ist in der Türe des Gehäuses der Materialweiche ein Türsensor angeordnet, welcher konzipiert ist, ein Statussignal an die Steuerung der Trennvorrichtung zu übermitteln, um Schwenkantrieb der Materialweiche sofort zu stoppen. Auf diese Weise wird die Sicherheit der Anlage wesentlich verbessert.

Insbesondere wird die oben genannte Trennvorrichtung als Metalltrennvorrichtung verwendet, in welcher Metallstücke aus einem Nicht-Metallmaterialfluss abgeschieden werden. Die Detektionseinrichtung ist entsprechend ein Metalldetektor. Selbstverständlich lässt sich die erfindungsgemäße Trennvorrichtung jedoch auch für die Absonderung anderer Stoffe, wie zum Beispiel wasserhaltiger Stoffe, organischer Stoffe oder irgendwelcher anderen Stoffe, nutzen, die durch eine Detektionseinrichtung erfassbar sind.

Es erübrigt sich zu sagen, dass es nicht notwendig ist, dass die Materialweiche nur ein einziges schwenkbares Leitelement aufweist. In der Materialweiche können auch zwei oder mehr schwenkbare Leitelemente angeordnet sein, um aus multiplen Zuflüssen oder aus einem Zufluss mehrere unterschiedliche Materialien in unterschiedliche Auslässe zu leiten. In dem Gehäuse der Materialweiche kann vorzugsweise eine Spüleinrichtung, zum Beispiel Sprühdüsen, angeordnet sein, um den Gehäuseinnenraum der Materialweiche zwischen dem Leitelement, falls dieses rohrförmig ist, und den Gehäuseinnenwänden zu reinigen. Die Anordnung von Sprühdüsen ist deshalb vorteilhaft, weil durch einen Hochdruckwasserstrahl eine sehr effiziente Reinigung des Gehäuseinnenraums möglich ist. Falls das Leitelement ein Leitrohr ist, kann dieses durch eine Spülvorrichtung für das Rohrleitsystem des Materialflusses der Trennvorrichtung gereinigt werden.

Folgende Ausdrücke werden synonym verwendet: Wellenzapfen - Lagerzapfen; Trennvorrichtung - Metallabscheider; Leitelement - Leitrohr;

Die Erfindung wird nachfolgend beispielsweise anhand der schematischen Zeichnung beschrieben. In dieser zeigen:
- Fig. 1: eine perspektivische Ansicht einer Trennvorrichtung mit geöffneter Türe des Gehäuses der Materialweiche,
- Fig. 2a: einen seitlichen Längsschnitt durch die Trennvorrichtung gemäß Fig. 1A und
- Fig. 2b: einen Längsschnitt durch die Trennvorrichtung gemäß der Linie A-A aus Fig. 2A.

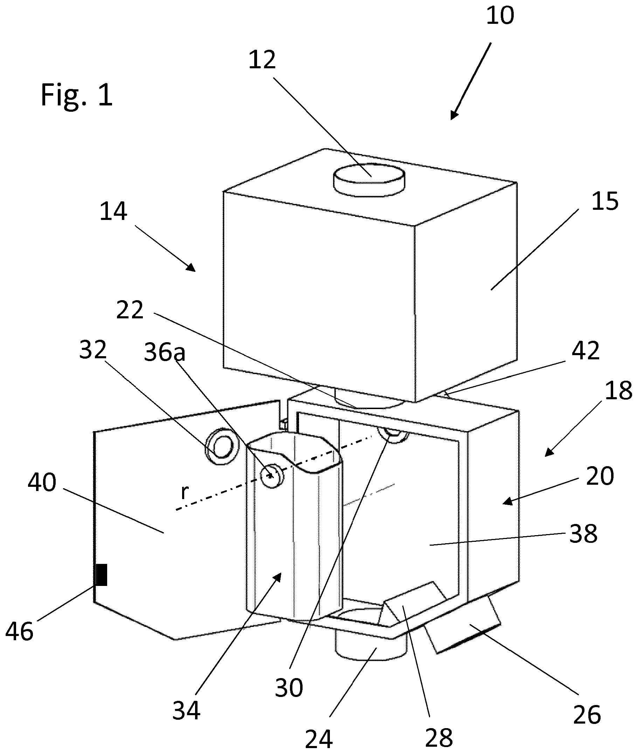

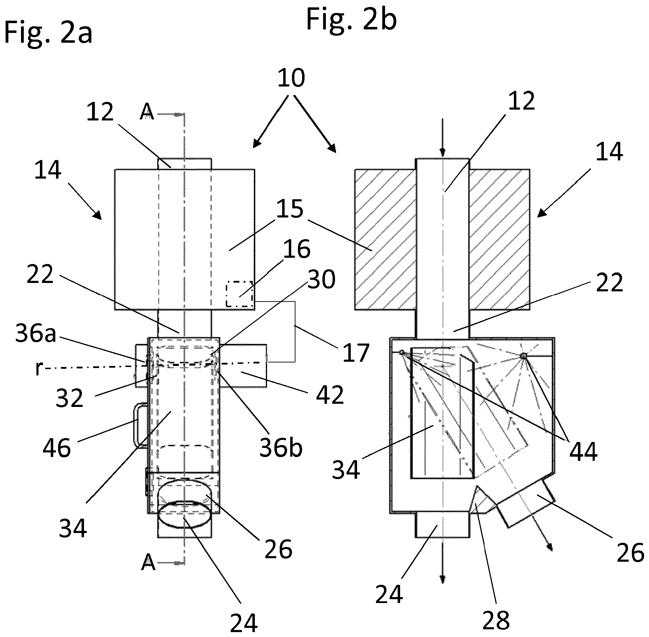

Fig. 1 zeigt in Verbindung mit den Figuren 2a und 2b eine Trennvorrichtung 10, welche als Förderstrecke ein Fallrohr 12 aufweist, das von einer Detektionseinrichtung 14 verbunden ist. Die Trennvorrichtung 10 hat eine Steuerung 16, die in dem Gehäuse 15 der Detektionseinrichtung 14 integriert sein kann. Am unteren Ende des Fallrohrs 12 ist eine Materialweiche 18 mit einem prismenförmigen Gehäuse 20 angeordnet. Das untere Ende des Fallrohres 12 bildet somit den Einlass 22 in dem Gehäuse 20 der Materialweiche 18. Das Gehäuse 20 hat an seiner Unterseite zwei rohrförmige in einem Winkel zueinander angeordnete Auslässe 24, 26, die durch eine spitz zulaufende Trennrippe 28 voneinander getrennt sind. Die Neigung der Auslässe 24, 26 entspricht der wechselseitigen Neigung zweier entsprechender Tangenten auf einer Kreisbahn um die Schwenkachse r des Leitrohres 34 im Ort der beiden Zentren der Auslässe 24, 26.

In dem Gehäuse 20 ist mittels zweier Lagerbuchsen 30, 32 ein Leitrohr 34 schwenkbar gelagert, welches mit seinen an einander beabstandeten Außenwänden des Leitrohres 34 angebrachten Lagerzapfen 36a,b in die beiden Lagerbuchsen 30, 32 im Gehäuse 20 und in der Tür 40 eingreift. In der Rückwand 38 des Gehäuses ist die erste Lagerbuchse 30 angeordnet. An diese Rückwand 38 ist außenseitig ein Schwenkantrieb 42 montiert, welcher durch entsprechende Eingriffsprofile mit dem zugeordneten Lagerzapfen 36a,b des Leitrohres 34 in einen funktionsmäßigen Eingriff tritt, um das Leitrohr 34 um die Schwenkachse r derart zu rotieren, dass es entweder mit dem ersten Auslass 24 oder mit dem zweiten Auslass 26 fluchtet. Durch die Tatsache, dass die beiden Lagerzapfen 36a,b des Leitrohres 34 an seinem oberen Ende angeordnet sind, bleibt der Einlass des Leitrohres 34 fluchtend mit dem Einlass 22 der Materialweiche 18 unabhängig davon, ob das untere Ende des Leitrohres 34 mit dem ersten Auslass 24 oder dem zweiten Auslass 26 fluchtet. Durch die Trennrippe 28 wird dafür gesorgt, dass der Innenraum des Gehäuses 20 der Materialweiche 18 nicht mit dem Material verschmutzt wird, welcher sich zwischen den beiden Auslässen 24, 26 absetzen könnte, da der zwischen dem Einlass 22 und den beiden Auslässen 24, 26 durch das Leitrohr 34 fließende Materialstrom in der Regel beim Umschalten von einen auf den anderen Auslass 24, 26 nicht unterbrochen wird.

Das Gehäuse 20 hat an seiner Vorderseite eine Türe 40, in welcher die zweite Lagerbuchse 32 für die Schwenklagerung des Leitrohres 34 angeordnet ist. Außenseitig ist an der Tür 40 ein Greifbügel 46 (Fig. 2a) angeordnet, um die Tür 40 einfach öffnen und schließen zu können. Zum Reinigen wird die Türe 40 in die dargestellte Öffnungsstellung aufgeschwenkt. Hierbei löst sich die zweite Lagerbuchse 32 an der Tür 40 von dem ersten Lagerzapfen 36a,b so dass das Leitrohr 34 nur mit seinem zweiten Lagerzapfen 36b in der ersten Lagerbuchse 30 an der Rückwand 38 des Gehäuses 20 der Materialweiche 18 gehalten ist. Das Leitrohr 34 kann nun einfach nach vorne entnommen werden, was es ermöglicht, sowohl das Leitrohr per se als auch den Innenraum des Gehäuses 20 der Materialweiche zu reinigen und/oder zu warten. Auf der anderen Seite ist hierdurch leicht ein Austausch des Leitrohres 34 möglich. Durch die Verwendung eines Leitrohres 34 mit einem im Wesentlichen quadratischen Querschnitt kann der angrenzende Bereiche zwischen den beiden Auslässen 24, 26, wo die Trennrippe 28 angeordnet ist, sehr dünn und stegartig gehalten werden, so dass sich dort beim Umschwenken des Leitrohres 34 keine großen Materialansammlungen in dem Innenraum des Gehäuses 20 festsetzen können.

Fig. 2b zeigt noch das optionale Vorsehen von Sprühdüsen 44 einer Waschvorrichtung, um den Innenraum des Gehäuses 20 zwischen dem Leitrohr 34 und den Innenwänden des Gehäuses 20 zu reinigen, zum Beispiel mit einem Dampfstrahl oder einem Hochdruckwasserstrahl. Die Reinigung kann geschehen, sowohl wenn sich das Leitrohr 34 im Gehäuse 20 befindet, also bei geschlossenem Gehäuse, als auch bei geschlossenem Gehäuse 20, wenn das Leitrohr 34 vorher entnommen wurde. Auf diese Weise kann der Innenraum des Gehäuses 20 der Materialweiche vollautomatisch gereinigt werden. Bei dieser Reinigung kann auch vorgesehen sein, dass die Sprühdüsen 44 betätigt werden, wenn sich das Leitrohr 34 in beiden möglichen Schwenkstellungen befindet, um so eine möglichst effiziente Reinigung zu gewährleisten.

Die Erfindung ist nicht auf das obige Ausführungsbeispiel beschränkt, sondern kann innerhalb des Schutzbereichs der beigefügten Patentansprüche beliebig modifiziert werden.

### Bezugszeichenliste:

- 10: Trennvorrichtung - Metallabscheider
- 12: Fallrohr - Förderstrecke
- 14: Detektionseinrichtung
- 15: Gehäuse der Detektionseinrichtung
- 16: Steuerung der Trennvorrichtung
- 18: Materialweiche
- 20: prismenförmiges Gehäuse der Materialweiche
- 22: Einlass der Materialweiche
- 24: erster Auslass der Materialweiche
- 26: zweiter Auslass der Materialweiche
- 28: Trennrippe
- 30: erste Lagerbuchse in der hinteren Gehäusewand
- 32: zweite Lagerbuchse in der Tür
- 34: Leitrohr - Leitelement
- 36a,b: Lagerzapfen am Leitrohr
- 38: Rückwand des Gehäuses der Materialweiche
- 40: Tür des Gehäuses der Materialweiche
- 42: Schwenkantrieb
- 44: Sprühdüsen der Wascheinrichtung für den Innenraum der Materialweiche
- 46: Greifbügel der Tür

## Patentansprüche

1. Materialweiche (18) zum Separieren von Schüttgut, mit einem Gehäuse (20), welches einen Einlass (22) und wenigstens zwei Auslässen (24, 26) als auch wenigstens ein zwischen dem Einlass (22) und den Auslässen (24, 26) mittels eines Schwenklagers (30, 32, 36a, 36b) schwenkbar angeordnetes Leitelement (34) aufweist, um den Materialstrom wahlweise einem der Auslässe (24, 26) zuzuführen, welche Materialweiche (18) einen Schwenkantrieb (42) zum Schwenken des Leitelements (34) aufweist, um dieses fluchtend zwischen dem Einlass (22) und jeweils einem der mehreren Auslässe (24, 26) auszurichten, wobei das Gehäuse (20) eine Tür (40) aufweist, die schwenkbar an dem Gehäuse (20) angelenkt ist, wobei ein erstes Lagerelement (30) des Schwenklagers (30, 32, 36a, 36b) an dem Gehäuse (20) angeordnet ist und ein zweites Lagerelement (32) des Schwenklagers (30, 32, 36a, 36b) an der Tür (40), und wobei das Leitelement (34) abnehmbar in dem ersten und /oder zweiten Lagerelement (30, 32) aufgenommen ist.

2. Materialweiche (18) nach Anspruch 1, **dadurch gekennzeichnet, dass** die gehäuse- und türseitigen ersten und zweiten Lagerelemente durch Lagerbuchsen (30, 32) gebildet sind und am Leitelement (34) Lagerzapfen (36a, 36b) ausgebildet sind, welche sich in die beide Lagerbuchsen (30, 32) hinein erstrecken.

3. Materialweiche (18) nach Anspruch 2, **dadurch gekennzeichnet, dass** an wenigstens einem der Lagerzapfen (36a, 36b) ein nicht rotationssymmetrisches Profil versenkt und/oder erhaben ausgebildet ist, welches mit einem komplementären Profil am Schwenkantrieb (42) in Eingriff bringbar ist.

4. Materialweiche (18) nach einem der vorhergehenden Ansprüche, **dadurch gekennzeichnet, dass** der Schwenkantrieb (42) mit dem Gehäuse (20) oder der Tür (40) der Materialweiche (18) verbunden ist.

5. Materialweiche (18) nach Anspruch 4, **dadurch gekennzeichnet, dass** der Schwenkantrieb (42) mit der Gehäusewand (38) verbunden ist, in welcher das erste Lagerelement (30) ausgebildet ist.

6. Materialweiche (18) nach einem der vorhergehenden Ansprüche, **dadurch gekennzeichnet, dass** das Leitelement als Leitrohr (34) ausgebildet ist.

7. Materialweiche (18) nach Anspruch 6, **dadurch gekennzeichnet, dass** die Ein- (22) und Auslässe (24, 26) durch Rohre gebildet sind.

8. Materialweiche (18) nach einem der vorhergehenden Ansprüche, **dadurch gekennzeichnet, dass** die Schwenkachse (r) des Leitelements (34) an seinem dem Einlass (22) zugewandten Ende liegt.

9. Materialweiche (18) nach einem der vorhergehenden Ansprüche, **dadurch gekennzeichnet, dass** das Gehäuse (20) und/oder die Tür (40) aus Metall bestehen.

10. Materialweiche (18) nach einem der vorhergehenden Ansprüche, **dadurch gekennzeichnet, dass** in Verbindung mit der Tür (40) ein Türsensor (46) angeordnet ist, der konzipiert ist, den Schwenkantrieb zu deaktivieren.

11. Trennvorrichtung für Schüttgüter, umfassend eine Materialweiche (18) nach einem der vorhergehenden Ansprüche, eine Materialzufuhr, eine Förderstrecke (12) für Schüttgüter, in welcher eine Detektionseinrichtung (14) und eine Steuerung (16) angeordnet ist, um wenigstens zwei in dem Schüttgut enthaltene Materialsorten zu trennen, wobei die Steuerung (16) konzipiert ist, in Abhängigkeit von einem Signal der Detektionseinrichtung (14) den Schwenkantrieb (42) der Materialweiche (18) zu betätigen, um mittels der Betätigung des Leitelements (34) ein Materialteil von dem Einlass (22) der Materialweiche (18) in einen der mehreren Auslässe (24, 26) der Materialweiche (18) zu leiten.

12. Trennvorrichtung nach Anspruch 11, **dadurch gekennzeichnet, dass** die Detektionseinrichtung (14) in einem Gehäuse (15) angeordnet ist, welches ein Fallrohr (12) umschließt, welches Fallrohr (12) in dem Gehäuse (20) der Materialweiche (18) endet und dort den Einlass (22) bildet.

13. Trennvorrichtung nach einem der Ansprüche 11 bis 12, **dadurch gekennzeichnet, dass** ein Türsensor (46) in der Tür (40) des Gehäuses (20) der Materialweiche (18) vorgesehen ist, welcher Türsensor (46) konzipiert ist, ein Statussignal die Steuerung (16) zu übermitteln, um den Schwenkantrieb zu deaktivieren.

14. Metalltrennvorrichtung mit einer Trennvorrichtung nach einem der Ansprüche 11 bis 13, **dadurch gekennzeichnet, dass** die Detektionseinrichtung (14) ein Metalldetektor ist.

## Claims

1. Material sorting gate (18) for separating bulk material, with a housing (20) comprising an inlet (22) and at least two outlets (24, 26) and also at least one guide element (34) arranged in a swivelling manner by means of a swivel bearing (30, 32, 36a, 36b) between the inlet (22) and the outlets (24, 26), in order to feed the material flow selectively to one of the outlets (24, 26), wherein the material sorting gate (18) comprises a swivel drive (42) for swivelling the guide element (34), in order to align the latter flush between the inlet (22) and respectively one of the plurality of outlets (24, 26), wherein the housing (20) comprises a door (40) which is hinged to the housing (20) in a swivelling manner, wherein a first bearing element (30) of the swivel bearing (30, 32, 36a, 36b) is arranged on the housing (20) and a second bearing element (32) of the swivel bearing (30, 32, 36a, 36b) is arranged on the door (40), and wherein the guide element (34) is removably accommodated in the first and/or second bearing element (30, 32).

2. Material sorting gate (18) according to claim 1, **characterised in that** the housing-side and door-side first and second bearing elements are formed by bearing bushes (30, 32) and that bearing pins (36a, 36b) are provided on the guide element (34), which extend into both bearing bushes (30, 32).

3. Material sorting gate (18) according to claim 2, **characterised in that** a non-rotation-symmetrical profile is formed in a countersunk and/or raised manner on at least one of the bearing pins (36a, 36b), which can be engaged with a complementary profile on the swivel drive (42).

4. Material sorting gate (18) according to any one of the preceding claims, **characterised in that** the swivel drive (42) is connected to the housing (20) or the door (40) of the material sorting gate (18).

5. Material sorting gate (18) according to claim 4, **characterised in that** the swivel drive (42) is connected to the housing wall (38), in which the first bearing element (30) is provided.

6. Material sorting gate (18) according to any one of the preceding claims, **characterised in that** the guide element is constituted as a guiding tube (34).

7. Material sorting gate (18) according to claim 6, **characterised in that** the inlet (22) and outlets (24, 26) are formed by tubes.

8. Material sorting gate (18) according to any one of the preceding claims, **characterised in that** the swivel axis (r) of the guide element (34) lies on its end facing the inlet (22).

9. Material sorting gate (18) according to any one of the preceding claims, **characterised in that** the housing (20) and/or the door (40) is made of metal.

10. Material sorting gate (18) according to any one of the preceding claims, **characterised in that** a door sensor (46) is arranged in connection with the door (40), which is designed to deactivate the swivel drive.

11. Separating device for bulk material, comprising a material sorting gate (18) according to any one of the preceding claims, a material feed, a conveyor section (12) for bulk material, in which a detection device (14) and a control (16) are arranged, in order to separate at least two kinds of material contained in the bulk material, wherein the control (16) is designed to actuate the swivel drive (42) of the material sorting gate (18) depending on a signal from the detection device (14), in order to guide a material part from the inlet (22) of the material sorting gate (18) into one of the plurality of outlets (24, 26) of the material sorting gate (18) by actuating the guide element (34).

12. Separating device according to claim 11, **characterised in that** the detection device (14) is arranged in a housing (15) which surrounds a downpipe (12), which downpipe (12) ends in the housing (20) of the material switching gate (18) and forms the inlet (22) there.

13. Separating device according to any one of claims 11 to 12, **characterised in that** a door sensor (46) is provided in the door (40) of the housing (20) of the material sorting gate (18), wherein the door sensor (46) is designed to transmit a status signal to the control (16) in order to deactivate the swivel drive.

14. Metal separating device with a separating device according to any one of claims 11 to 13, **characterised in that** the detection device (14) is a metal detector.

## Revendications

1. Séparateur de matières (18), destiné à séparer des produits en vrac, pourvu d'un carter (20), lequel comporte une entrée (22) et au moins deux sorties (24, 26), tout comme également au moins un élément de guidage (34), placé de manière pivotante entre l'entrée (22) et les sorties (24, 26) au moyen d'un palier de pivotement (30, 32, 36a, 36b), pour alimenter le flux de matières sélectivement vers l'une des sorties (24, 26), lequel séparateur de matières (18) comporte un entraînement en pivotement (42), destiné à faire pivoter l'élément de guidage (34), pour orienter celui-ci en alignement entre l'entrée (22) et chaque fois l'une des plusieurs sorties (24, 26), le carter (20) comportant une porte (40), qui est articulée de manière pivotante sur le carter (20), un premier élément de palier (30) du palier de pivotement (30, 32, 36a, 36b) étant placé sur le carter (20) et un deuxième élément de palier (32) du palier de pivotement (30, 32, 36a, 36b) étant placé sur la porte (40), et l'élément de guidage (34) étant reçu de manière amovible dans le premier et/ou dans le deuxième élément de palier (30, 32).

2. Séparateur de matières (18) selon la revendication 1, **caractérisé en ce que** les premier et deuxième éléments de palier placés côté carter et côté porte sont constitués de coussinets (30, 32) et sur l'élément de guidage (34) sont constitués de tourillons (36a, 36b), lesquels s'étendent à l'intérieur des deux coussinets (30, 32).

3. Séparateur de matières (18) selon la revendication 2, **caractérisé en ce que** sur au moins l'un des tourillons (36a, 36b), un profilé non symétrique en rotation, lequel est susceptible d'être amené en engagement avec un profilé complémentaire sur l'entraînement en pivotement (42) est conçu en étant encastré et/ou en relief.

4. Séparateur de matières (18) selon l'une quelconque des revendications précédentes, **caractérisé en ce que** l'entraînement en pivotement (42) est assemblé avec le carter (20) ou avec la porte (40) du séparateur de matières (18).

5. Séparateur de matières (18) selon la revendication 4, **caractérisé en ce que** l'entraînement en pivotement (42) est assemblé avec la paroi (38) du carter, dans laquelle est conçu le premier élément de palier (30).

6. Séparateur de matières (18) selon l'une quelconque des revendications précédentes, **caractérisé en ce que** l'élément de guidage est conçu sous la forme d'un tube de guidage (34).

7. Séparateur de matières (18) selon la revendication 6, **caractérisé en ce que** les entrées (22) et sorties (24, 26) sont constituées par des tubes.

8. Séparateur de matières (18) selon l'une quelconque des revendications précédentes, **caractérisé en ce que** l'axe de pivotement (r) de l'élément de guidage (34) se situe sur son extrémité qui fait face à l'entrée (22).

9. Séparateur de matières (18) selon l'une quelconque des revendications précédentes, **caractérisé en ce que** le carter (20) et/ou la porte (40) consistent en un métal.

10. Séparateur de matières (18) selon l'une quelconque des revendications précédentes, **caractérisé en ce qu'**en liaison avec la porte (40) est placé un capteur de porte (46) qui est conçu pour désactiver l'entraînement en pivotement.

11. Dispositif séparateur de produits en vrac, comprenant un séparateur de matières (18) selon l'une quelconque des revendications précédentes, une alimentation de matières, un trajet de convoyage (12) de produits en vrac, dans lequel est placé un dispositif de détection (14) et un système de commande (16), pour séparer au moins deux sortes de matières contenues dans les produits en vrac, le système de commande (16) étant conçu, pour actionner en fonction d'un signal du dispositif de détection (14) l'entraînement en pivotement (42) du séparateur de matières (18), pour diriger au moyen de l'actionnement de l'élément de guidage (34) une partie de matière de l'entrée (22) du séparateur de matières (18) vers l'une des plusieurs sorties (24, 26) du séparateur de matières (18).

12. Dispositif séparateur selon la revendication 11, **caractérisé en ce que** le dispositif de détection (14) est placé dans un carter (15), lequel entoure une conduite descendante (12), laquelle conduite descendante (12) se termine dans le carter (20) du séparateur de matières (18) et y constitue l'entrée (22).

13. Dispositif séparateur selon l'une quelconque des revendications 11 à 12, **caractérisé en ce qu'**un capteur de porte (46) est prévu dans la porte (40) du carter (20) du séparateur de matières (18), lequel capteur de porte (46) est conçu pour transmettre un signal d'état au système de commande (16), pour désactiver l'entraînement en pivotement.

14. Dispositif séparateur de métaux, pourvu d'un dispositif séparateur selon l'une quelconque des revendications 11 à 13, **caractérisé en ce que** le dispositif de détection (14) est un détecteur de métaux.
